Europäisches Patentamt

European Patent Office

Office européen des brevets

(19)

(11) Numéro de publication : **0 351 334 B1**

(12)     **FASCICULE DE BREVET EUROPEEN**

(45) Date de publication du fascicule du brevet :
**18.08.93 Bulletin 93/33**

(51) Int. Cl.⁵ : **C01G 43/01,** C01B 15/047,
C01G 56/00, C01F 15/00,
C01F 17/00, C01G 27/00

(21) Numéro de dépôt : **89420249.8**

(22) Date de dépôt : **10.07.89**

(54) **Procédé de fabrication de pastilles combustibles nucléaires comportant la production et l'utilisation de poudres coulantes et frittables obtenues directement par précipitation de péroxydes.**

Le dossier contient des informations techniques présentées postérieurement au dépôt de la demande et ne figurant pas dans le présent fascicule.

(30) Priorité : **11.07.88 FR 8809845**

(43) Date de publication de la demande :
**17.01.90 Bulletin 90/03**

(45) Mention de la délivrance du brevet :
**18.08.93 Bulletin 93/33**

(84) Etats contractants désignés :
**BE DE ES FR GB**

(56) Documents cités :
FR-A- 1 187 352
FR-A- 1 335 272
FR-A- 2 352 750

(56) Documents cités :
US-A- 4 530 823
PATENT ABSTRACTS OF JAPAN, vol. 4, no. 34
(C-3)[516], 22 mars 1980, page 20 C 3; & JP-
A-55 7527 (MITSUBISHI KINZOKU K.K.) 19-
01-1980

(73) Titulaire : **URANIUM PECHINEY**
**Tour Manhattan, La Défense 2, 6, place de l'Iris,**
**F-92400 Courbevoie (FR)**

(72) Inventeur : **Florenancig, Antoine**
**4, Les Mas de la Murette**
**F-38140 La Murette (FR)**
Inventeur : **Mollard, Paul**
**38, chemin Croix Pivort**
**F-69110 Ste Foy Les Lyon (FR)**

(74) Mandataire : **Vanlaer, Marcel et al**
**PECHINEY 28, rue de Bonnel**
**F-69433 Lyon Cédex 3 (FR)**

## Description

### DOMAINE TECHNIQUE

L'invention concerne l'obtention de pastilles combustibles nucléaires d'oxydes frittés $M_xO_y$, de forte densité, utilisant des poudres très coulantes, compactables et frittables obtenues directement par précipitation de péroxydes à partir de solutions de sels solubles des éléments M. Ces poudres obtenues selon l'invention n'ont en effet pas besoin de subir des traitements de conditionnement complémentaires tels que broyage, tamisage, granulation..., ni d'être additionnées d'adjuvants, pour être coulantes et frittables.

Dans tout ce qui est exposé M représente tous éléments ou mélanges d'éléments utilisés habituellement dans la confection des pastilles combustibles nucléaires et particulièrement tous les éléments fissile ou fertiles, tels que U, Pu, Th, Ce... ou neutrophages, tels que Gd, Hf.

### ETAT DE LA TECHNIQUE

Les procédés de fabrication de pastilles combustibles nucléaires comportent en général plusieurs étapes et partent de solutions aqueuses de sels solubles, en général des nitrates ou des sulfates, des éléments métalliques constituant les oxydes contenus dans les pastilles combustibles finales.

Au cours des étapes intermédiaires, on obtient des poudres solides qui habituellement doivent subir des opérations de conditionnement telles que broyage, tamisage, granulation et/ou autres traitements pour les rendre facilement coulables et aptes au pressage et au frittage.

Il est important de supprimer de telles opérations par souci de simplification et également pour éviter des manipulations de poudre qui sont toujours source de poussières et de formation d'aérosols solides nocifs ou dangereux pour la salubrité et l'environnement, et difficiles à maitriser.

Ainsi, les brevets US 4152395 et US 4271127 décrivent un procédé permettant d'éviter de tels traitements de conditionnement des poudres intermédiaires tout en conservant la qualité des produits finis. Dans ce procédé, on précipite de l'uranium sous forme de peroxyde à partir d'une solution de nitrate d'uranyle, peu concentrée en uranium (70 à 150 g d'uranium/l) à l'aide d'une solution également peu concentrée de peroxyde d'hydrogène (15 à 20 %), le pH étant maintenu entre 1 et 2,5 par introduction d'un mélange air-ammoniaque. La solution initiale de nitrate d'uranyle contient du nitrate d'ammonium, dans le cas où on veut obtenir des pastilles d'oxyde fritté de forte densité (US-A-4271127 col.2, 1.24-27 et col.3, 1.59 à Col.4, 1.3).

Cette précipitation est effectuée en continu dans un cylindre à section constante; les réactifs sont introduits à l'aide de conduits débouchant l'un au-dessus de l'autre dans un ordre bien particulier (de bas en haut: solution uranifère, mélange air-NH3, solution de peroxyde d'hydrogène) et à des distances bien déterminées qui sont importantes pour l'obtention de la forme désirée des grains de peroxyde (US-A-4 271 127 col.3, 1.6-13); la suspension obtenue est homogénéisée par une agitation vigoureuse (3 renouvellements par minute) et évacuée en totalité par surverse au sommet du réacteur. Le peroxyde d'uranium obtenu par ce procédé est constitué de grains sphériques et l'uniformité de la précipitation est obtenue par la configuration de l'appareil.

Un tel procédé s'il permet d'avoir des grains ronds de qualité constante ne permet ni d'obtenir une granulométrie resserrée, les fines particules étant évacuées par surverse avec l'ensemble de la suspension, ni de contrôler ou de faire varier de façon aisée ladite granulométrie.

De plus, ce procédé présente l'inconvénient d'introduire dans la solution de départ, en vue d'obtenir des pastilles frittées de forte densité, du nitrate d'ammonium en plus de celui qui est généré par l'introduction d'ammoniaque.

Pour résoudre le problème du contrôle de la granulométrie et éviter la présence de fines dans le produit précipité, il est connu d'utiliser un réacteur à lit fluidisé de section constante. Ainsi, on obtient sélectivement des grains ayant la granulométrie désirée, par un soutirage desdits grains de la zone du réacteur où ils se forment, les fines restant dans la zone haute du réacteur où elles grossissent avant de rejoindre la zone de soutirage; ainsi, la surverse du réacteur est soit un liquide clair, soit un liquide contenant seulement des fines en faible concentration qui sont ensuite recyclées par l'intermédiaire d'un décanteur.

L'application d'une telle technique, par exemple à la précipitation de peroxyde d'uranium à partir de solutions de nitrates concentrées, s'est avérée inefficace. En effet, on assiste à une production importante et croissante de fines que même une augmentation du temps de séjour de la suspension dans le réacteur ne parvient pas à maitriser. L'obtention d'un peroxyde à granulométrie contrôlée et resserrée, c'est-à-dire exempt de fines, se révèle ainsi impossible. Cependant, ces propriétés, ainsi qu'une forme sphérique des grains, sont nécessaires pour pouvoir disposer, dans la suite du procédé d'obtention de pastilles frittées, à la fois de poudres coulantes et de pastilles combustibles de très haute densité sans traitement supplémentaire de conditionnement desdites poudres.

## OBJET DE L'INVENTION

Compte tenu des problèmes, rencontrés dans les procédés connus, ci-dessus évoqués, la demanderesse a mis au point un procédé par étapes dont l'objet est de produire des pastilles combustibles nucléaires d'oxydes frittés à partir de solutions de nitrates des éléments devant être contenus dans lesdites pastilles.

Le procédé selon l'invention permet d'obtenir tout d'abord la précipitation de particules de peroxydes sphériques, de granulométrie contrôlée et resserrée, c'est-à-dire à teneur réduite en fines, ces particules conduisant ensuite à des poudres facilement coulables et manipulables, sans traitement particulier de conditionnement (tels que broyage, tamisage, granulation...), puis à l'obtention directe de pastilles d'oxyde crues de solidité améliorée et enfin des pastilles d'oxyde frittées de très forte densité, supérieure en général à 96% de la densité théorique, sans utilisation d'adjuvant ou d'additif tels que plastifiant, nitrate d'ammonium, etc...

Un autre objet de l'invention est de disposer d'un procédé de précipitation de peroxydes de productivité élevée, c'est-à-dire utilisant des solutions de départs et des réactifs concentrés, tout en obtenant, comme cela a été dit, des particules sphériques de granulométrie contrôlée.

Un autre objet est d'obtenir un débit faible et une quantité également faible d'effluents à traiter ou à rejeter.

## DESCRIPTION DE L'INVENTION

L'invention est un procédé d'obtention de pastilles d'oxydes frittés $M_xO_y$, M représentant un ou plusieurs des métaux ou éléments utilisés dans la constitution de pastilles combustibles nucléaires, comportant

a) le traitement d'une solution initiale de sels solubles du ou des éléments M à l'aide de peroxyde d'hydrogène,

b) l'obtention d'un précipité de peroxydes en suspension dans des eaux-mères,

c) une séparation dudit précipité d'avec les eaux-mères,

d) une calcination, puis d'une réduction dudit précipité conduisant à une poudre intermédiaire d'oxydes,

e) un pressage puis un frittage de ladite poudre.

lequel procédé permet d'obtenir directement des pastilles d'oxydes frittés de très forte densité supérieure à 96% de la densité théorique, tout en évitant des traitements particuliers de conditionnement desdites poudres intermédiaires d'oxydes, et est caractérisé en ce que ledit traitement a) de précipitation à l'aide de peroxydes d'hydrogène est effectué à partir des solutions desdits sels solubles à un pH maintenu entre 2 et 2,5 à l'aide d'ammoniac gazeuse ou en solution, dans un réacteur continu à lit fluide comportant au moins trois zones cylindriques superposées de section circulaire et de diamètres différents, reliées entre elles par des zones de jonctions tronconiques, lesdites trois zones cylindriques comportant une zone cylindrique d'extrémité basse d'extraction du précipité, au moins une zone cylindrique centrale, dite de travail, au moins une zone cylindrique d'extrémité haute, dite de débordement, ladite zone d'extrémité basse ayant un diamètre inférieur à celui ou ceux de la ou des zones cylindriques centrales, la ou les zones centrales étant agitées vigoureusement tandis que l'agitation dans les zones d'extrémité est modérée.

Ce procédé permet également d'obtenir intermédiairement des poudres ayant des particules sphériques, une granulométrie contrôlée et resserrée, à teneur en fines réduite, facilement coulantes, sans traitement de conditionnement intermédiaire, tels que broyage, classification, tamisage, granulation... et des pastilles d'oxydes crues de qualité et solidité améliorées. Il permet simultanément de réaliser de fortes productivités.

Le procédé selon l'invention est applicable à l'obtention de pastilles d'oxydes frittées $M_xO_y$ où M représente plus particulièrement les métaux ou éléments habituellement utilisés dans les combustibles nucléaires en particulier les éléments fissile ou fertiles, les éléments neutrophages ou tous autres éléments additionnels. Ainsi, M peut représenter de préférence l'uranium de toutes teneurs isotopiques, c'est-à-dire naturel, appauvri ou enrichi et de toutes provenances, par exemple cycles de conversion, de retraitement, d'enrichissement, y compris enrichissement au laser, etc..., mais aussi le plutonium, le thorium, le cérium, la gadolinium, le hafnium etc... M peut également représenter un mélange de ces éléments et préférentiellement les mélanges contenant au moins l'uranium.

Dans le procédé, comprenant plusieurs étapes, on part d'une solution de sels solubles du ou des métaux ou éléments M devant constituer les pastilles d'oxydes frittées finales. Ces sels solubles sont généralement des nitrates, sulfates ou chlorures, mais de préférence on utilise des nitrates ou sulfates et plus particulièrement des nitrates. Cette solution est traitée par une solution de peroxyde d'hydrogène et de l'ammoniac pour précipiter des peroxydes en suspension dans les eaux-mères. On sépare le solide du liquide, on lave, puis on calcine la poudre solide obtenue pour la transformer en oxyde, que l'on réduit dans un four en atmosphère d'hydrogène et d'azote; la poudre réduite est ensuite débarrassée des agglomérats qui auraient pu se former lors des traitements thermiques et pressée pour donner des pastilles crues qui sont ensuite frittées.

Comme on peut le voir, on n'ajoute aucun additif lors de la précipitation ou du pressage-frittage et les poudres obtenues suite à la précipitation ne subissent aucun traitement de conditionnement, ou de préparation tel que broyage, constitution de coupes granulométriques, granulation..., pour obtenir cependant des pastilles de qualité améliorée.

Ce résultat inattendu est obtenu en portant une attention particulière aux conditions de la précipitation des peroxydes qui permettent d'obtenir des particules conférant aux poudres les propriétés souhaitées.

Ainsi, la solution de sels solubles peut contenir de 50 à 600 g d'uranium/ l, mais il est recommandé de travailler à des concentrations comprises entre 250 et 500 g d'uranium/l. La solution de peroxyde d'hydrogène utilisée titre au moins 30% et de préférence 70% et est ajoutée en quantité telle qu'en fin de précipitation l'excès soit compris entre 1 et 10 g/l et de préférence entre 2 et 5 g/l.

Au cours de la précipitation le pH peut être maintenu dans la plage 1,5 à 3,5 grâce à l'addition d'ammoniaque, mais il est préférable d'opérer entre 2 et 2,5. En effet, très rapidement dès que le pH devient plus acide, on obtient une production exagérée de fines particules, ce phénomène étant perceptible en-dessous de pH 1,5, par contre quand le pH est plus alcalin, par exemple dès pH 3,5, le contrôle du pH devient très difficile et le fonctionnement est instable.

La teneur résiduaire en uranium est toujours inférieur à 20 mg d'uranium/l et de préférence compris entre 2 et 15 mg/l. La température doit être comprise entre 35 et 60°C et de préférence entre 35 et 45°C pour obtenir le peroxyde d'uranium hydraté contenant quatre molécules d'eau. A température plus élevée, dès 65°C, on obtient le dihydrate.

Cette précipitation doit être effectuée dans un réacteur à circulation continue de réactifs comportant :

. une zone d'extrémité basse cylindrique à section circulaire, dite zone d'extraction, de préférence terminée elle-même à sa partie inférieure par un cône servant à la vidange et à l'introduction de réactifs et de liqueurs de recyclage. Ce cône est de préférence agité.

. une zone d'extrémité supérieure constituée d'au moins une zone, dite de débordement, cylindrique à section circulaire, comportant une surverse, zone éventuellement reliée par sa partie inférieure à une autre zone cylindrique à section circulaire, de diamètre plus petit, dite zone haute, à l'aide d'une zone tronconique.

Habituellement, la surverse est reliée à un décanteur dont la partie basse contenant les fines décantées est reliée par l'intermédiaire d'une pompe de recirculation à la pointe du cône de la zone basse, et dont la surverse contenant des eaux-mères claires constitue l'effluent à traiter et/ou rejeter.

. une zone centrale de travail constituée d'au moins une zone cylindrique à section également circulaire reliée aux zones d'extrémité à l'aide de sections tronconiques. Si la zone de travail comporte plusieurs zones cylindriques, ces dernières sont reliées entre elles par des sections tronconiques.

La zone de travail est impérativement agitée mécaniquement et vigoureusement à l'aide par exemple d'un agitateur à pales verticales. Les zones d'extrémités, hormis la zone de débordement, le sont également mais modérément.

Pour améliorer l'agitation de la zone de travail, on peut installer des contre-pâles fixées sur les parois des cylindres de la zone de travail.

L'agitation de la zone centrale de travail doit être efficace pour assurer un important renouvellement des surfaces de contact entre solide et liquide, favorisant le grossissement des grains, en particulier des fines, et une bonne dispersion des réactifs. La vitesse d'agitation est comprise entre 20 et 80 tours/min et de préférence entre 40 et 70 tours/min.

L'agitation des zones haute et basse, qui doit être modérée, doit être juste suffisante pour éviter les passages préférentiels par effet de cheminée et pour assurer le renouvellement du contact solide-liquide. Elle contribue à la formation des sphérules. Mais elle ne doit pas être trop importante pour ne pas créer une homogénéisation préjudiciable du lit.

La solution de sels solubles de départ est introduite, en plusieurs points de la zone de travail, de préférence quatre. Les autres réactifs (solution d'eau oxygénée, ammoniac gazeux ou en solution) sont introduits en un ou plusieurs endroits du réacteur. Il est préférable de faire déboucher les introductions des différents réactifs à proximité immédiate des agitateurs, par exemple au niveau de l'extrémité des contrepales, de façon à disperser instantanément lesdits réactifs. Les positions respectives de ces introductions de réactifs n'a pas d'importance. Les réactifs ne sont pas préchauffés. L'excès de peroxyde d'hydrogène est contrôlé à la surverse de la zone de débordement.

On peut également introduire en partie la solution saline de départ dans le cône en pied de réacteur ou dans la zone d'extraction, dans le cas où on veut, en augmentant la quantité de fines générées dans le pied de réacteur, diminuer la granulométrie moyenne du produit extrait.

Cette possibilité de jouer sur la quantité de fines est assez inhabituelle pour l'homme de l'art; en effet, quand on utilise un procédé en lit fluide, on subit généralement une production de fines superflue qui se retrouve dans le produit final extrait, alors que l'invention permet de ne pas avoir de production superflue de fines puisque cette production doit au contraire être provoquée pour diminuer la granulométrie moyenne des particules extraites. Ainsi les particules extraites, par ailleurs classées granulométriquement en contiennent un minimum desdites fines et ont une granulométrie contrôlée et resserrée.

L'extraction du produit précipité se fait à l'aide d'un piquage installé dans la zone cylindrique d'extraction. Son réglage détermine le débit de production et permet également de fixer la teneur en solide de la suspension aqueuse présente dans le réacteur, ou le temps de séjour des particules en liaison avec la vitesse ascensionnelle. La teneur en solide de la suspension présente dans la zone de travail est généralement maintenue entre 300 et 1700 g/l, mais il est préférable de la régler entre 1100 et 1500 g/l. La productivité, ramenée à un litre de la zone de travail (y compris les zones tronconiques adjacentes de liaison) n'est ainsi jamais inférieure à 200 g d'uranium/l et préférentiellement à 350 g d'uranium/l.

Dans la zone de travail, la vitesse de la phase aqueuse doit être comprise entre 0,4 et 1,8 m/h et de préférence entre 0,7 et 1,3 m/h; elle doit être au moins deux fois inférieure à la vitesse régnant dans la zone basse d'extraction.

Ainsi, le diamètre de la zone de travail est supérieur à celui de la zone d'extraction; en général il est également supérieur à celui de la zone haute.

Cette vitesse est obtenue en tenant compte des débits des réactifs introduits et en les complétant par un débit de recyclage réglable obtenu en faisant circuler en circuit fermé, de bas en haut dans le réacteur, la phase aqueuse issue de la pointe du décanteur à l'aide de la pompe de recirculation.

La granulométrie est liée à la vitesse ascensionnelle, à la densité de la suspension, au temps de séjour du solide dans le réacteur et également à la production de fines.

Ainsi, selon l'invention, on peut obtenir des particules substantiellement sphériques, mécaniquement résistantes, dont on peut choisir la granulométrie moyenne (passant 50%) en combinant les conditions opératoires; elle est en général supérieure à 10 μm et de préférence comprise entre 30 et 80 μm. Cette granulométrie est par ailleurs très homogène et très resserrée, ne comportant ni fines, ni grosses particules : le rapport entre le diamètre des particules pour lequel le refus cumulé est de 10% et le diamètre des particules pour lequel le refus cumulé est de 90% est compris entre 1,5 et 2,5. Ce rapport, traduisant l'étalement granulométrique, signifie que 80% des particules extraites ont des dimensions situées dans un tel intervalle. En comparaison dans les procédés de l'art antérieur où les fines ne sont pas séparées, un tel rapport est au mieux voisin de 4 et dépasse souvent 6.

Lors de la précipitation on peut ajouter des additifs qui augmentent la vitesse de grossissement des grains, tels que l'oléate d'isobutyl et des additifs pour stabiliser le peroxyde d'hydrogène, tels que les pyrophosphates, benzoates, le sulfate d'orthoxyquinoléïne.

Après extraction du réacteur de la suspension de particules, on sépare ces dernières de leurs eaux-mères, on les lave pour éliminer le sel d'ammonium issu de la neutralisation par l'ammoniaque de l'acide formé lors de la précipitation du peroxyde.

Ces particules sont ensuite calcinées à une température comprise entre 350 et 600°C, en atmosphère d'azote, puis réduite généralement entre 400 et 600°C, préférentiellement entre 500 et 600°C en atmosphère d'azote et hydrogène.

La poudre ainsi obtenue a une coulabilité améliorée. Le facteur d'écoulement établi selon la norme MPA (Metal Powder Association) Standard 3-45 de juin 1945 (correspondant à ASTM B 213-48) montre un temps d'écoulement de la poudre à travers un orifice de 7,62 mm d'environ 25 sec alors que pour des poudres qui ont subi concassage et granulation selon l'art antérieur, cette caractéristique se situe entre 40 et 70 sec. Cette amélioration se traduira par un gain de productivité lors du pastillage et par un meilleur remplissage des alvéoles de pastillage entraînant une meilleure qualité des pastilles crues. De même, l'absence de fines évitera les problèmes liés au grippage du poinçon de pastillage.

Cette poudre a une densité apparente élevée, supérieure à 2,5, et également une surface spécifique BET, plus élevée que ce qui est connu, évoluant entre 5,5 et 7 m²/g, ce qui est favorable au frittage.

L'amélioration de ces caractéristiques va être déterminante pour l'obtention de pastilles frittées finales de densité élevée supérieure à 96% de la densité théorique.

Selon l'invention, la poudre réduite est donc envoyée, après une éventuelle élimination des agglomérats grossiers par passage par exemple sur un tamis de maille 400 μm, et une lubrification par adjonction de stéarate de zinc, directement, sans autre traitement de conditionnement, au pastillage où la poudre est automatiquement introduite dans une alvéole et compressée à froid par un poinçon. On obtient des pastilles de densité crue élevée comprise entre 5,8 et 6,1 qui sont très solides. Un test d'abrasion pratiqué sur ces pastilles crues donne une perte de poids inférieure à 5%, alors qu'avec des pastilles crues issues de poudres de l'art antérieur le même test donne 20 à 30% de perte de poids.

Les pastilles crues sont ensuite frittées sous atmosphère d'hydrogène à une température d'environ 1750°C. La densité obtenue est supérieure à 96% de la densité théorique. Les pastilles sont pratiquement homogènes:

. pas de défaut de texture, ni d'aspect; elles n'ont subi aucun dégat, ébréchures, fissures, cratères... au cours des manipulations, du frittage ou de la rectification postérieure au frittage.

. porosité très régulière, taille des grains supérieure à 8 μm également régulière.

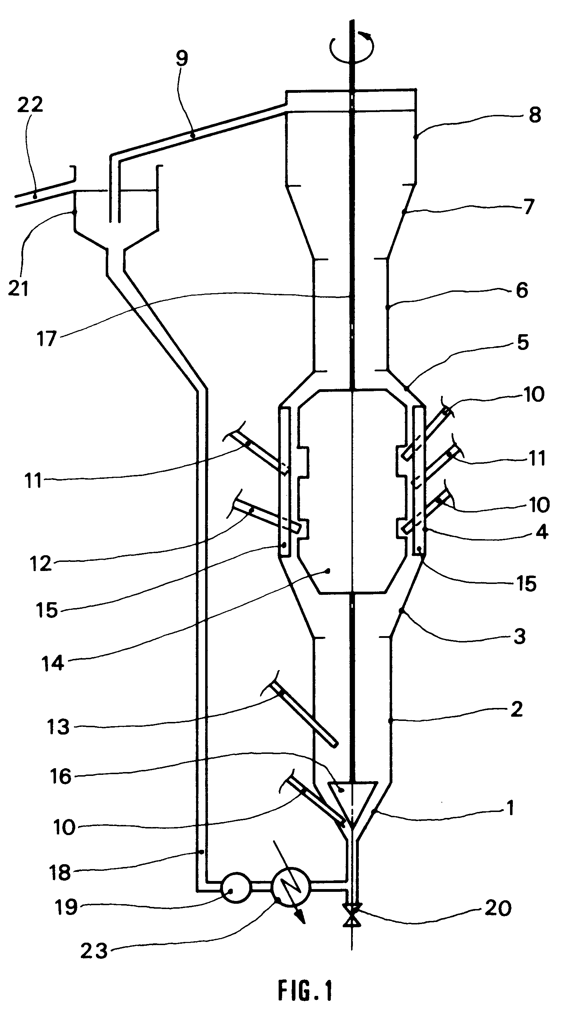

La figure 1 illustre un réacteur avec lequel est conduit le procédé selon l'invention. On y voit:

en 1 le cône de vidange avec son agitateur 16

en 2 la zone basse d'entraction

en 3 - 4 - 5 la zone de travail constituée de troncs de cône de liaison 3 et 5 et de la partie cylindrique 4

en 6 - 7 - 8 la zone d'extrémité supérieure constituée de la zone haute cylindrique 6, d'un tronc de cône de liaison 7, et de la zone de débordement 8 équipée de surverses 9

en 10 les alimentations en solution nitratée

en 11 les alimentations en ammoniaque

en 12 les alimentations en peroxyde d'hydrogène

en 13 l'extraction de la suspension

en 14 l'agitateur à pale

en 15 les contre-pales fixées sur la paroi intérieure du cylindre de la zone de travail

en 17 l'axe de rotation sur lequel sont fixés les agitateurs 14 et 16

en 18 la conduite de recyclage de la surverse

en 19 la pompe de recyclage

en 20 une vanne de vidange

en 21, le décanteur assurant le recyclage des fines entrainées à la surverse 9 et assurant l'évacuation de l'effluent en 22

en 23 un échangeur destiné à maintenir la température du lit fluide à la température de consigne.

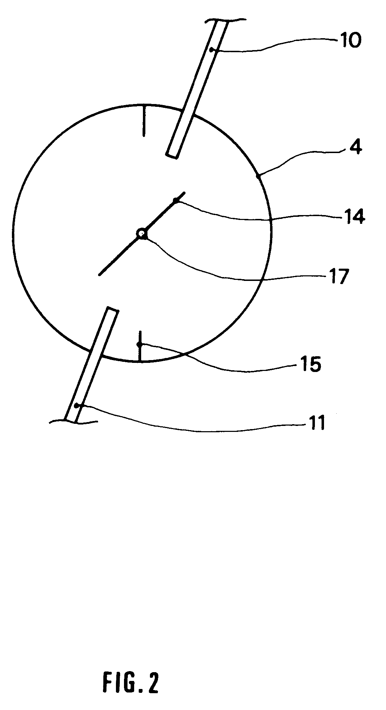

Sur la figure 2 on a représenté en coupe le schéma de principe des introductions de réactifs quand elles débouchent au niveau de l'extrémité des contre-pales dans le cylindre de la zone de travail du réacteur; on y voit

en 4 le cylindre de la zone de travail

en 14 l'agitateur à pale et son axe 17

en 15 les contre-pales

en 10 une introduction de la solution nitratée

en 11 une introduction d'ammoniaque

## EXEMPLE 1

Cet exemple illustre qu'en effectuant une précipitation classique de peroxyde dans un réacteur à lit fluide classificateur habituel il n'est pas possible d'obtenir une poudre coulante de granulométrie suffisamment grosse, homogène et resserrée, pour obtenir des pastilles frittées de densité élevée sans traitement de conditionnement préalable des poudres intermédiaires d'oxydes.

On est parti d'une solution de nitrate d'uranyl contenant 350 g d'uranium/l La précipitation du peroxyde d'uranium a été effectuée dans un réacteur à lit fluide classificateur classique, à circulation ascendante, assurant de bas en haut une classification granulométrique et une teneur en solide de la suspension décroissantes.

Il comprend à sa base un cône surmonté d'un cylindre de 700 mm de hauteur et de 70 mm de diamètre, surmonté lui-même d'une zone de décantation et débordement de 100 mm de diamètre (soit 2,7 l pour la zone de travail). Il est muni d'un agitateur à vitesse lente muni de barreaux simples. la surverse passe dans un décanteur dont le pied est recyclé dans le récateur à lit fluide.

On dispose:

. d'une injection de la solution uranifère de départ dans le cône et de deux injections dans le cylindre. Le débit total est de 120 g d'uranium/h.

. de deux injections de solution de $H_2O_2$ dans le cylindre

. de trois injections de $NH_3$ dans le cylindre de façon à maintenir le pH à 2 dans la partie inférieure du lit et à 2,5 dans sa partie supérieure

. d'une extraction de la suspension formée, située dans le quart inférieur du cylindre.

On assiste alors à une production croissante de fines que l'on ne contrôle pas même en diminuant fortement le débit d'alimentation et en modifiant la vitesse ascensionnelle et l'agitation.

On a alors introduit la totalité de la solution uranifère dans le cône de façon à éviter des sursaturations locales vraisemblablement responsables de cette production intempestive de fines. Il n'y a pas eu d'amélioration.

La poudre obtenue à partir de cette précipitation contenait donc une forte proportion de fines non sphérique, l'étalement granulométrique avoisinant 6; elle ne coulait pas facilement et il aurait fallu lui faire subir des traitements intermédiaires de conditionnement pour qu'elle soit apte à être utilisée pour obtenir des pastilles frittées.

Par ailleurs, on constate qu'il ne faut pas dépasser une production de 14 g d'uranium par heure et par litre de zone active pour maîtriser la production de fines, ce qui est beaucoup trop faible pour être exploitable industriellement.

Cette poudre ne répondant pas aux objectifs fixés, il était inutile de mettre en oeuvre les étapes suivantes du procédé.

## EXEMPLE 2

Cet exemple illustre l'obtention, selon l'invention, de pastilles frittées d'uranium.

La solution de départ est une solution de nitrate d'uranyl titrant 300 g d'uranium/l. La précipitation est effectuée dans un réacteur comportant une zone de travail cylindrique de diamètre 140 mm de hauteur 160 mm, reliée de part et d'autre, par l'intermédiaire de deux troncs de cônes, à deux cylindres de diamètre 72 mm, le cylindre bas d'extraction se terminant par un cône et le cylindre haut étant relié par l'intermédiaire d'un tronc de cône à un cylindre de débordement de diamètre 140 mm et de 100 mm de hauteur. La zone de travail a un volume total de 3,6 l.

L'agitateur est constitué d'une grande pale verticale (largeur 110 mm, hauteur 220 mm) munie de 4 échancrures sur les arêtes verticales, destinées au passage de 4 injecteurs de solution uranifère, et de 4 orifices de diamètres 25 mm pratiqués en pleine tôle. Il est monté sur un arbre situé dans l'axe du réacteur. Deux contre-pales (hauteur 160 mm, largeur 10 mm) sont fixées diamètralement opposées sur la partie cylindrique. Il tourne à 50 tours/min.

Chacune des zones cylindriques haute et basse comporte également chacune deux fois deux barreaux plats d'agitation de 10 mm de hauteur fixés sur le même arbre.

L'alimentation en réactifs est faite:

. dans la zone de travail, par 4 injecteurs de solution uranifère débouchant au niveau des contre-pales, par deux injecteurs d'ammoniaque, titrant 160 g/l, débouchant au ras de la paroi.

. par un injecteur de $H_2O_2$ à 30% situé en pied de la zone cylindrique basse.

L'extraction de la suspension de particule est faite à l'aide d'un piquage pénétrant d'une longueur d'environ 1 cm dans la partie basse d'extraction.

Le pH a été maintenu entre 2 et 2,5, et la teneur en $H_2O_2$, de la surverse a été maintenu en permanence entre 3 et 5 g/l. Cette surverse, qui comporte des fines non décantées, est recyclée en pied de réacteur, après passage dans un décanteur en vue d'assurer le recyclage desdites fines pour les grossir, de provoquer la classification des particules dans la zone d'extraction et de contribuer à la mise en suspension du lit fluide.

Dans un premier temps l'alimentation en solution uranifère a été portée progressivement jusqu'à 760 g d'uranium/h. Après stabilisation du lit, la teneur en solide de la zone de travail était de 1200 g/l. Les particules extraites étaient sphériques, leur granulométrie moyenne est allée en augmentant pour atteindre 75 μm.

Le teneur en fines de la surverse recyclée est passée de 5 g/l à 38 g/l. On ne retrouve pas ces fines dans les suspensions extraites puisque l'étalement granulométrique était compris entre 2,28 et 2,45; ceci signifie qu'elles ont été grossies avant extraction.

Dans un deuxième temps on a disposé deux alimentations supplémentaires en solution uranifère: une dans le cône en pied de réacteur et une dans la zone cylindrique basse.

L'alimentation totale en uranium est portée progressivement à 1550 g d'uranium/h, dont 220 g d'uranium/h à l'aide des deux alimentations en zone basse. La teneur en solide de la zone de travail est de 1330 g/l.

La granulométrie moyenne des particules extraites atteint progressivement 69 μm avec un étalement granulométrique de 1,6.

Au cours de ces productions 8 échantillons de suspension ont été prélevés avec des granulométries moyennes allant de 32 à 69 μm et des étalements granulométriques s'étageant de 1,6 à 2,45.

Ces échantillons ont été ensuite filtrés et lavés, calcinés à 575°C sous atmosphère d'azote (6m³/h), puis réduits à 600°C sous une atmosphère d'azote (2m³/h) et d'hydrogène (4m³/h) pour obtenir une poudre d'$UO_2$ à grains sphériques, dont les caractéristiques sont données dans le tableau 1.

TABLEAU 1

CARACTERISTIQUES DES POUDRES UO$_2$

| N° ECHANTILLON | | 1 | 2 | 3 | 4 | 5 | 6 | 7 | 8 |
|---|---|---|---|---|---|---|---|---|---|
| Péroxyde | Granulométrie moyenne du peroxyde obtenu à la précipitation à 50 µm | 51 | 61 | 63 | 68 | 69 | 32 | 37 | 41 |
| Poudre UO$_2$ | Densité apparente | 2,75 | 2,69 | 2,68 | 2,71 | 2,75 | 2,65 | 2,53 | 2,62 |
| | Facteur d'écoulement $\phi$ 7,62 mm | 25 | 24 | 24 | 26 | 20 | 20 | 24 | 29 |
| | Granulométrie moyenne d50 ( µm) | 37,4 | 41,7 | 43,1 | 44,9 | 38,3 | 23,8 | 27,6 | 32,1 |
| | Surface spécifique BET (m2/g) | 6,33 | 6,50 | 6,62 | 6,80 | 5,63 | 6,31 | 6,07 | 6,92 |
| | Rapport O/U | 2,123 | 2,125 | 2,113 | 2,126 | 2,122 | 2,117 | 2,119 | 2,118 |
| | Teneur H20 (ppm) | 1965 | 1710 | 1655 | 1430 | 1465 | 1585 | 1605 | 1760 |

Ces poudres d'UO$_2$ ont ensuite été passées au tamis de maille 400 µm qui n'a donné aucun refus, puis lubrifié par mélange avec 0,3% de stéarate de Zn.

Elles ont été ensuite utilisées directement dans une pastilleuse automatique pour donner des pastilles crues de diamètre 9,9 mm et de longueur environ 15 mm, qui ont été ensuite fritées dans un four continu comportant une zonne de préfrittage de 400 à 700°C puis une zone de frittage à 1750°C, sous atmosphère d'hydrogène sec (6 m³/h).

Les pastilles frittées ont ensuite été rectifiées à la meule diamantée.

Les caractéristiques des pastilles crues et frittées sont données dans le tableau 2.

TABLEAU II

| N°Echant. | PASTILLES CRUES | | | PASTILLES FRITTEES |
|---|---|---|---|---|
| | Pression de compactage (T) | Densité crue | Fragilité (perte de poids en %) | Densité (% de la densité théorique) |
| 1 | 5,2 | 6,03 | 2,8 | 96,655 |
| 2 | 5,7 | 6,03 | 4,2 | 96,708 |
| 3 | 6,0 | 5,99 | 2,9 | 96,099 |
| 4 | 6,2 | 6,01 | 3,9 | 96,328 |
| 5 | 5,3 | 6,02 | 2,6 | 96,407 |
| 6 | 5,7 | 6,05 | 2,9 | 96,082 |
| 7 | 5,5 | 6,05 | 2,3 | 96,157 |
| 8 | 5,8 | 6,02 | 2,9 | 96,436 |

On voit que toutes les densités des pastilles frittées sont supérieures à 96% de la densité théorique. Par ailleurs ces pastilles offrent une très bonne stabilité thermique (variation de la densité inférieure à 0,6% de la densité théorique)et une structure très homogène (porosité régulière, pas de défauts).

## Revendications

1. Procédé d'obtention de pastilles d'oxydes frittées $M_xO_y$, M représentant un ou plusieurs des métaux ou éléments utilisés dans la constitution des pastilles combustibles nucléaires, comportant :

   a) le traitement d'une solution initiale de sels solubles du ou des éléments M à l'aide de peroxyde d'hydrogène,

   b) l'obtention d'un précipité de peroxydes en suspension dans des eaux mères,

   c) une séparation dudit précipité d'avec les eaux mères,

   d) une calcination, puis une réduction dudit précipité, conduisant à une poudre intermédiaire d'oxydes,

   e) un pressage puis un frittage de ladite poudre,

   lequel procédé permet d'obtenir directement des pastilles d'oxydes frittés de très forte densité supérieure à 96% de la densité théorique, tout en évitant des traitements particuliers de conditionnement desdites poudres intermédiaires d'oxydes, et est caractérisé en ce que ledit traitement a) de précipitation à l'aide de peroxyde d'hydrogène est effectué à partir des solutions concentrées desdits sels solubles à un pH maintenu entre 2 et 2,5 à l'aide d'ammoniac gazeux ou en solution dans un réacteur continu à lit fluide comportant au moins trois zones cylindriques superposées de section circulaire et de diamètres différents, reliées entre elle par des zones de jonctions tronconiques, lesdites trois zones cylindriques comportant une zone cylindrique d'extrémité basse d'extraction du précipité, au moins une zone cylindrique centrale, dite de travail, au moins une zone cylindrique d'extrémité haute, dite de débordement, ladite zone d'extrémité basse ayant un diamètre inférieur à celui ou ceux de la ou des zones cylindriques centrales, la ou les zones centrales étant agitées vigoureusement tandis que l'agitation dans les zones d'extrémité est modérée.

2. Procédé selon la revendication 1 caractérisé en ce que M représente l'un au moins des métaux ou éléments utilisés dans les combustibles nucléaires, tels que U,Pu, Th, Ce, Gd, Hf.

3. Procédé selon la revendication 2, caractérisé en ce que M représente les mélanges contenant au moins l'uranium.

4. Procédé selon la revendication 2, caractérisé en ce que M représente l'uranium seul.

5. Procédé selon l'une quelconque des revendications 1 à 4, caractérisé en ce que les sels solubles sont des sulfates ou nitrates.

6. Procédé selon l'une quelconque des revendications 1 à 5 caractérisé en ce que la solution initiale est une solution de nitrate d'uranyle dont la concentration est comprise 50 et 600 g d'uranium/litre et de préférence entre 250 et 500 g d'uranium par litre.

7. Procédé selon l'une quelconque des revendications 1 à 6, caractérisé en ce que la précipitation de peroxydes est réalisé à l'aide d'une solution de peroxyde d'hydrogène concentrée, titrant au moins 30%.

8. Procédé selon l'une quelconque des revendications 1 à 7 caractérisé en ce que la quantité de peroxyde d'hydrogène ajoutée en maintienne un excès de 1 à 10 g/l et de préférence de 2 à 5 g/l, mesuré à la surverse de la zone de débordement.

9. Procédé selon l'une quelconque des revendications 1 à 8, caractérisé en ce que l'alimentation en solution initiale de sels solubles est effectuée en partie dans la zone d'extrémité basse.

10. Procédé selon l'une quelconque des revendications 1 à 9, caractérisé en ce que la phase aqueuse circule de bas en haut dans le réacteur, par recyclage d'une partie de la surverse de la zone de débordement dans un cône, situé en pied de réacteur, contigu à la zone d'extraction.

11. Procédé selon l'une quelconque des revendications 1 à 10, caractérisé en ce que la teneur en solide de la suspension dans la zone de travail est maintenu entre 300 et 1700 g/l et de préférence entre 1100 et 1500 g/l.

12. Procédé selon l'une quelconque des revendications 1 à 11, caractérisé en ce que la vitesse d'écoulement de la phase aqueuse dans la zone de travail est au moins deux fois inférieure à celle existant dans la zone basse d'extraction.

13. Procédé selon l'une quelconque des revendications 1 à 12, caractérisé en ce que la vitesse ascensionnelle de la phase aqueuse dans la zone de travail est comprise entre 0,4 et 1,8 m/h et de préférence entre 0,7 et 1,3 m/h.

14. Procédé selon l'une quelconque des revendications 1 à 13, caractérisé en ce que le réacteur comporte une zone cylindrique, dite zone haute, entre la zone haute de débordement et la zone centrale de travail, et que le diamètre de ladite zone haute est inférieur à celui de la zone de travail.

15. Procédé selon l'une quelconque des revendications 1 à 14, caractérisé en ce que le précipité séparé d'avec ses eaux mères est calciné à une température comprise entre 350 et 600°C sous atmosphère d'azote.

16. Procédé selon l'une quelconque des revendications 1 à 15, caractérisé en ce que le précipité calciné est traité par un agent réducteur à une température comprise entre 400 et 600°C et de préférence entre 500 et 600°C.

**Patentansprüche**

1. Verfahren zur Herstellung von gesinterten $M_xO_y$-Oxidtabletten, wobei M ein oder mehrere der bei der Bildung der Kernbrennstofftabletten verwendeten Metalle oder Elemente darstellt, das aufweist:
a) die Behandlung einer Ausgangslösung löslicher Salze des oder der Elemente M mit Hilfe von Wasserstoffperoxid,
b) das Erhalten einer Ausfällung von Peroxiden in Suspension in Mutterlaugen,
c) eine Trennung der Ausfällung von den Mutterlaugen,
d) eine Kalzinierung, danach eine Reduktion der Ausfällung, was zu einem Zwischenpulver von Oxiden führt,
e) ein Pressen, danach ein Sintern dieses Pulvers,
welches Verfahren es ermöglicht, direkt gesinterte Oxidtabletten sehr hoher Dichte über 96 % der theoretischen Dichte zu erhalten, wobei besondere Konditionierungsbehandlungen der Oxidzwischenpulver vermieden werden, und dadurch gekennzeichnet ist, daß die Behandlung a) zur Ausfällung mit Hilfe von Wasserstoffperoxid ausgehend von konzentrierten Lösungen der löslichen Salze bei einem mit Hilfe gasförmigen oder gelösten Ammoniaks zwischen 2 und 2,5 gehaltenen pH-Wert in einem Fließbett-Durchlaufreaktionsgefäß mit wenigstens drei übereinander angeordneten, zylindrischen Zonen kreisförmigen Querschnitts und verschiedener Durchmesser durchgeführt wird, die untereinander durch kegelstumpfförmige Anschlußzonen verbunden sind, wobei die drei zylindrischen Zonen eine zylindrische Unterendzone zum Austrag der Ausfällung, wenigstens eine zylindrische mittlere, sog. Arbeitszone und wenigstens eine zylindrische sog. Überlauf-Oberendzone aufweisen und wobei die Unterendzone einen kleineren Durchmesser als den oder die der zylindrischen mittleren Zone bzw. Zonen haben, die kräftig gerührt wird bzw. werden, während das Rühren in den Endzonen mäßig ist.

2. Verfahren nach dem Anspruch 1, dadurch gekennzeichnet, daß M wenigstens eines der in den Kernbrennstoffen verwendeten Metalle oder Elemente, wie U, Pu, Th, Ce, Gd, Hf, bedeutet.

3. Verfahren nach dem Anspruch 2, dadurch gekennzeichnet, daß M die wenigstens Uran enthaltenden Gemische bedeutet.

4. Verfahren nach dem Anspruch 2, dadurch gekennzeichnet, daß M Uran allein bedeutet.

5. Verfahren nach irgendeinem der Ansprüche 1 bis 4, dadurch gekennzeichnet, daß die löslichen Salze Sulfate oder Nitrate sind.

6. Verfahren nach irgendeinem der Ansprüche 1 bis 5, dadurch gekennzeichnet, daß die Ausgangslösung eine Uranylnitratlösung ist, deren Konzentration im Bereich von 50 bis 600 g Uran/Liter und vorzugsweise zwischen 250 und 500 g Uran je Liter ist.

7. Verfahren nach irgendeinem der Ansprüche 1 bis 6, dadurch gekennzeichnet, daß die Ausfällung von Peroxiden mit Hilfe einer konzentrierten, wenigstens 30 % titrierenden Wasserstoffperoxidlösung durchgeführt wird.

8. Verfahren nach irgendeinem der Ansprüche 1 bis 7, dadurch gekennzeichnet, daß die zugesetzte Wasserstoffperoxidmenge daran einen Überschuß von 1 bis 10 g/l und vorzugsweise von 2 bis 5 g/l, gemessen am Überlauf der Überlaufzone, beibehält.

9. Verfahren nach irgendeinem der Ansprüche 1 bis 8, dadurch gekennzeichnet, daß die Zuführung der Ausgangslösung löslicher Salze zum Teil in die Unterendzone erfolgt.

10. Verfahren nach irgendeinem der Ansprüche 1 bis 9, dadurch gekennzeichnet, daß die wäßrige Phase im Reaktionsgefäß von unten nach oben durch Rückführung eines Teils des Überlaufs der Überlaufzone in einen am Fuß des Reaktionsgefäßes befindlichen, an die Austragszone angrenzenden Trichter zirkuliert.

11. Verfahren nach irgendeinem der Ansprüche 1 bis 10, dadurch gekennzeichnet, daß der Feststoffgehalt der Suspension in der Arbeitszone zwischen 300 und 1700 g/l und vorzugsweise zwischen 1100 und 1500 g/l gehalten wird.

12. Verfahren nach irgendeinem der Ansprüche 1 bis 11, dadurch gekennzeichnet, daß die Strömungsgeschwindigkeit der wäßrigen Phase in der Arbeitszone wenigstens zweimal niedriger als die in der unteren Austragszone ist.

13. Verfahren nach irgendeinem der Ansprüche 1 bis 12, dadurch gekennzeichnet, daß die Aufstiegsgeschwindigkeit der wäßrigen Phase in der Arbeitszone im Bereich von 0,4 bis 1,8 m/h und vorzugsweise von 0,7 bis 1,3 m/h liegt.

14. Verfahren nach irgendeinem der Ansprüche 1 bis 13, dadurch gekennzeichnet, daß das Reaktionsgefäß eine sog. obere zylindrische Zone zwischen der oberen Überlaufzone und der mittleren Arbeitszone aufweist und daß der Durchmesser der oberen Zone kleiner als der der Arbeitszone ist.

15. Verfahren nach irgendeinem der Ansprüche 1 bis 14, dadurch gekennzeichnet, daß die von ihren Mutterlaugen getrennte Ausfällung bei einer Temperatur im Bereich von 350 bis 600 °C in Stickstoffatmosphäre kalziniert wird.

16. Verfahren nach irgendeinem der Ansprüche 1 bis 15, dadurch gekennzeichnet, daß die kalzinierte Ausfällung mit einem Reduktionsmittel bei einer Temperatur im Bereich von 400 bis 600 °C und vorzugsweise von 500 und 600 °C behandelt wird.

**Claims**

1. A method of obtaining pellets of fritted MxOy oxides, M representing one or more of the metals or elements used to form nuclear fuel pellets, comprising
   a) treating an initial solution of soluble salts of the element or elements M with hydrogen peroxide,
   b) obtaining a precipitate of peroxides suspended in mother liquors,
   c) separating the precipitate from the mother liquors,
   d) calcining then reducing the precipitate, to give an intermediate oxide powder,
   e) pressing then fritting the powder.
   the method being a direct way of obtaining fritted oxide pellets of very high density, over 96% of the theoretical density, while avoiding any special conditioning treatment for the intermediate oxide powders, and being characterised in that the precipitation treatment a) with hydrogen peroxide is carried out from concentrated solutions of the soluble salts, kept at a pH between 2 and 2.5 with ammonia gas or ammonia in solution, in a continuous, fluidised bed reactor; that the reactor comprises at least 3 superposed cylindrical sections of circular cross-section and different diameters, interconnected by frustoconical joining sections, the three cylindrical sections comprising a lower end cylindrical section for extracting the precipitate, at least one central cylindrical section known as the working section, and at least one upper end cylindrical section known as the overflow section, the lower end section having a diameter smaller than that or those of the central cylindrical section or sections, and that the central section or sections are agitated vigorously, whereas agitation in the end zones is moderate.

2. The method of claim 1, characterised in that M represents at least one of the metals or elements used in nuclear fuels, such as U, Pu, Th, Ce, Gd or Hf.

3. The method of claim 2, characterised in that M represents mixtures containing at least uranium.

4. The method of claim 2, characterised in that M represents uranium only.

5. The method of any of claims 1 to 4, characterised in that the soluble salts are sulphates or nitrates.

6. The method of any of claims 1 to 5, characterised in that the initial solution is a uranyl nitrate solution at a concentration of from 50 to 600 g of uranium/l and preferably from 250 to 500 g.

7. The method of any of claims 1 to 6, characterised in that the peroxides are precipitated with a strong hydrogen peroxide solution at a concentration of at least 30%.

8. The method of any of claims 1 to 7, characterised in that sufficient hydrogen peroxide is added to maintain an excess of 1 to 10 g/l and preferably 2 to 5 g/l, measured in the overflow from the overflow section.

9. The method of any of claims 1 to 8, characterised in that the initial solution of soluble salts is fed in partly into the lower end section.

10. The method of any of claims 1 to 9, characterised in that the aqueous phase flows upwardly in the reactor, through part of the overflow from the overflow section being recycled into a cone at the bottom of the reactor, adjoining the discharge section.

11. The method of any of claims 1 to 10, characterised in that the solids content of the suspension in the working section is kept at from 300 to 1700 g/l and preferably from 1100 to 1500 g/l.

12. The method of any of claims 1 to 11, characterised in that the speed at which the aqueous phase flows into the working section is at least twice as slow as that in the lower discharge section.

13. The method of any of claims 1 to 12, characterised in that the ascending speed in the working section is from 0.4 to 1.8 m/h and preferably from 0.7 to 1.3 m/h.

14. The method of any of claims 1 to 13, characterised in that the reactor has a cylindrical section known as the upper section, between the upper overflow section and the central working section, and that the diameter of said upper section is less than that of the working section.

15. The method of any of claims 1 to 14, characterised in that the precipitate separated from its mother liquors is calcined at a temperature of from 350 to 600°C in a nitrogen atmosphere.

16. The method of any of claims 1 to 15, characterised in that the calcined precipitate is treated with a reducing agent at a temperature of from 400 to 600°C and preferably from 500 to 600 °C.

FIG. 1

10

4

14

17

15

11

FIG. 2